# FASCICULE DE BREVET EUROPEEN

(11) **EP 3 458 256 B1**
(45) Date de publication et mention de la délivrance du brevet: **13.05.2020**
(21) Numéro de dépôt: 17729522.7
(22) Date de dépôt: 22.05.2017
(51) Int. Cl.: B29D 30/32

(54) **INSTALLATION DE RETROUSSAGE DESTINÉE A LA FABRICATION D'ÉBAUCHES DE PNEUMATIQUES**
FALTSYSTEM ZUR HERSTELLUNG VON REIFENROHLINGEN
FOLDING-UP SYSTEM FOR MANUFACTURING GREEN TYRES

(30) Priorité: 20.05.2016 FR 1654511
(43) Date de publication de la demande: 27.03.2019
(73) Titulaire: Compagnie Générale des Etablissements Michelin, 63000 Clermont-Ferrand (FR)
(72) Inventeur: MASSOPTIER-DAVID, Michaël, 63040 Clermont-Ferrand Cedex 9 (FR)
(74) Mandataire: Redouté, Gilles Pierre
(86) Numéro de dépôt international: PCT/FR2017/051250
(87) Numéro de publication internationale: WO 2017/198975

(56) Documents cités:
- WO-A1-2009/070019
- WO-A1-2015/145356
- DE-A1-102009 044 830
- DE-A1-102011 050 140
- US-A- 4 131 500
- US-A1- 2006 180 263
- US-A1- 2009 277 569

## Description

L'invention concerne le retroussage d'ébauches de pneumatiques.

La fabrication d'une ébauche de pneumatique comprend une étape de retroussage qui consiste à appliquer une couche de gomme crue sur des flancs d'une ébauche de carcasse de pneumatique. Cette étape a pour but, d'une part, de fixer la couche de gomme crue sur chacun des flancs de l'ébauche de carcasse, et, d'autre part, d'emprisonner une tringle, destinée à améliorer des propriétés mécaniques du pneumatique.

On connait une installation comprenant un fût, un support monté coulissant par rapport au fût, des bras articulés au support et des moyens de guidage, fixés sur le fût, pour guider des extrémités libres des bras.

Une telle installation fonctionne de la manière suivante. On installe l'ébauche de carcasse sur le fût. La couche de gomme a initialement une configuration cylindrique et recouvre les bras appliqués le long du fût, parallèlement les uns aux autres. Des moyens d'entrainement, par exemple formés par un vérin pneumatique fixé au fût et interne à ce dernier, font coulisser le support, et donc également les bras, en direction de l'ébauche. Les bras entrainent la couche de gomme qui amorce ainsi un retournement. Lorsque les extrémités libres des bras arrivent en contact avec les moyens de guidage, ces derniers contraignent les bras à tourner par rapport au support dans le but de faire glisser les bras le long des flancs de l'ébauche pour appliquer la couche de gomme crue. En particulier, la rotation des bras est commandée par le coulissement du support grâce aux moyens de guidage.

Une telle installation présente certains inconvénients.

En effet, les bras sont entrainés en translation et en rotation par le vérin pneumatique. On ne peut donc pas commander précisément la pression qu'appliquent les bras sur la couche de gomme crue pour la fixer aux flancs de l'ébauche. Il s'ensuit qu'on risque d'appliquer soit une pression insuffisante sur la couche de gomme, ce qui pourrait nuire à sa bonne fixation sur l'ébauche, soit une pression trop importante, auquel cas la couche de gomme est laminée et donc détériorée.

Il n'est pas possible de modifier la trajectoire des bras lors du retroussage sans changer la forme des moyens de guidage. Il est ainsi difficilement envisageable d'ajuster la trajectoire des bras en fonction du type d'ébauche de pneumatique qu'on souhaite réaliser.

Enfin, étant donné que les moyens d'entrainement sont fixés au fût, il n'est pas possible d'entrainer le fût en rotation, afin de faire tourner l'ébauche pour lui donner une orientation souhaitée, car les câbles des moyens d'entrainement permettant de les alimenter en énergie entraveraient cette rotation et finiraient par se rompre. Cette installation est donc relativement peu souple d'utilisation.

Le document du brevet US 2006/0180263 A révèle une installation de retroussage, comprenant les caractéristiques du préambule de la revendication 1.

Un but de l'invention est d'améliorer les modalités du retroussage de l'ébauche de pneumatique et d'offrir plus de possibilités à ce sujet.

A cet effet, on prévoit selon l'invention une installation de retroussage d'ébauches de pneumatiques selon la revendication 1.

Ainsi, l'installation de retroussage selon l'invention est plus souple d'utilisation que celle de l'art antérieur présentée dans ce qui précède.

En effet, grâce au fait que les moyens d'entrainement en coulissement et les moyens d'entrainement en rotation sont externes à la base, ils n'entravent pas la rotation de la base, si bien qu'on peut faire tourner l'ébauche sans risquer de détériorer l'installation.

De plus, l'installation permet de commander la rotation des bras quelle que soit la vitesse et la position du support et même lorsque le support reste immobile par rapport au fût. Autrement dit, les bras peuvent tourner sans coulisser. Plus généralement, leur rotation est indépendante de leur coulissement. Il est ainsi possible, quelles que soient la position et la vitesse du support par rapport au fût, de faire tourner les bras, ce qui rend possible le pilotage de la position des bras et de la pression qu'ils appliquent sur la couche de gomme crue une fois qu'ils sont en contact avec celle-ci, indépendamment de la position et de la vitesse du support. Cela rend également possible l'ajustement de la trajectoire des bras lors d'un procédé de retroussage en fonction du type d'ébauche de pneumatique à réaliser. En effet, des ébauches de différentes formes et/ou de différentes tailles imposent des trajectoires des bras différentes. On apporte donc encore plus de souplesse dans le procédé de retroussage.

Le fait que le coulissement et la rotation des bras soient indépendants de la position des bras par rapport à l'ébauche permet d'améliorer davantage la reproductibilité, et donc la qualité, du retroussage.

Enfin, le pilotage en position et en pression permet d'améliorer la reproductibilité du retroussage et donc la qualité générale des pneumatiques fabriqués.

L'installation rend également facile de séparer les moyens d'entrainement des bras et de la base lorsqu'il n'est pas fait usage de ces moyens. Et des bases différentes peuvent être associées tour à tour à un même ensemble de moyens d'entrainement en fonction des besoins. On peut donc fabriquer des ébauches sur différentes bases et accoupler chaque base aux moyens d'entrainement lorsqu'on souhaite procéder au retroussage.

De préférence, les moyens d'entrainement en coulissement et les moyens d'entrainement en rotation occupent la configuration passive.

L'ébauche est ainsi prête à subir l'étape de son procédé de fabrication suivant l'étape de retroussage.

Avantageusement, la base comprend un fût de support d'une ébauche, monté mobile en rotation par rapport à un bâti de l'installation, les moyens d'entrainement en coulissement et les moyens d'entrainement en rotation étant aptes à entrainer les bras en coulissement et en rotation même lorsque le fût est en rotation.

On peut ainsi changer l'orientation de l'ébauche même pendant le retroussage, par exemple à des fins d'inspection du bon déroulement du retroussage ou pour réduire l'influence de la gravité sur le procédé de retroussage.

Avantageusement, l'installation comprend en outre un support monté coulissant par rapport à la base, les bras étant articulés au support.

L'installation comprend de la sorte un organe reliant tous les bras, ce qui permet de tous les manipuler simultanément.

Avantageusement, le support comprend un premier organe de connexion monté coulissant par rapport à la base et un second organe de connexion monté coulissant par rapport au premier organe de connexion, les bras étant articulés d'une part au premier organe de connexion et d'autre part au second organe de connexion.

Ainsi, pour faire tourner les bras par rapport au support, il suffit de faire coulisser le second organe de connexion par rapport au premier organe de connexion.

De préférence, les premier et second organes de connexion comprennent chacun au moins un manchon.

Les organes de connexion sont ainsi réalisés avec des moyens simples et robustes.

De préférence, le second organe de connexion recouvre le premier organe de connexion.

Le second organe de connexion est ainsi facile à agencer par rapport au premier organe de connexion.

Les moyens d'entrainement en coulissement coopèrent ainsi facilement avec le support de l'installation.

Avantageusement, l'installation comprend en outre un organe de pilotage des moyens d'entrainement en coulissement et les moyens d'entrainement en rotation pour commander une position des bras.

On peut ainsi commander à tout instant la position des bras et la pression qu'ils appliquent sur l'ébauche.

On prévoit aussi un tambour d'assemblage d'ébauches de pneumatiques qui comprend :
- une base de réception d'une ébauche de pneumatique,
- des bras de retroussage reliés à la base, et
- au moins un organe de couplage apte à entrainer les bras en coulissement quelle que soit la position des bras par rapport à l'ébauche et à coopérer avec des moyens d'entrainement en coulissement des bras, externes au tambour, et à entrainer les bras en rotation quelle que soit la position des bras par rapport à l'ébauche et à coopérer avec des moyens d'entrainement en rotation des bras, externes au tambour.

On prévoit également selon l'invention un procédé de retroussage d'une ébauche de pneumatique selon la revendication 9.

Grâce au découplage des moyens d'entrainement en coulissement et des moyens d'entrainement en rotation de la base et des bras après le coulissement et la rotation des bras, l'ébauche est prête à subir l'étape de son procédé de fabrication suivant l'étape de retroussage.

Avantageusement, un organe de pilotage commande les moyens d'entrainement en coulissement et les moyens d'entrainement en rotation pour déplacer les bras selon des trajectoires prédéfinies.

On peut ainsi piloter la position des bras et la pression qu'ils appliquent sur l'ébauche en fonction du type d'ébauche faisant l'objet du retroussage.

On va maintenant décrire un mode de réalisation de l'invention à l'appui des dessins annexés sur lesquels :
- les figures 1 et 2 sont des vues en perspective d'une installation de retroussage d'ébauches de pneumatiques selon l'invention,
- les figures 3 et 4 sont des vues en coupe longitudinale de l'installation de la figure 1 dans des configurations différentes,
- la figure 5 est une vue en perspective selon un angle différent de l'installation de la figure 1,
- les figures 6 à 8 sont des vues en coupe longitudinale de l'installation de la figure 1 dans des configurations différentes, et
- les figures 9 et 10 sont des représentations graphiques de deux trajectoires des bras permises par l'installation de la figure 1.

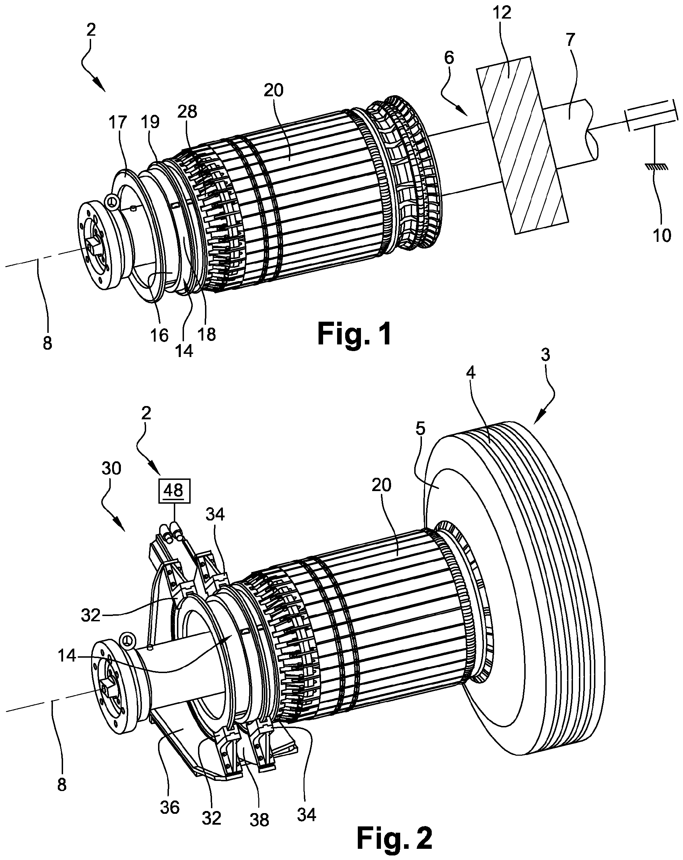

On a illustré en figures 1 et 2 une installation de retroussage d'ébauches de pneumatiques 2 selon l'invention. Cette installation 2 est destinée à réaliser un retroussage d'une ébauche crue de pneumatique 3 dotée d'un sommet 4 de forme générale proche de celle d'un cylindre et de deux flancs 5 situés de part et d'autre du sommet 4 et s'étendant en regard l'un de l'autre, depuis le sommet 5 et en direction d'un axe principal de l'ébauche 3. L'installation 2 est adaptée pour le retroussage de tout type de pneumatique.

L'installation 2 comprend une base de réception 6 d'une ébauche de pneumatique. Cette base de réception 6 comprend un fût 7, ici de forme générale cylindrique, présentant un axe principal 8. Le fût 7 est monté mobile en rotation par rapport à un bâti 10 de l'installation 2 autour de l'axe 8. Le fût 7 présente sur une face externe un socle 12, illustré schématiquement sur la figure 1 et destiné à recevoir l'ébauche 3 en vue de son retroussage. La base 6 fait partie d'un tambour cylindrique d'axe 8 permettant la confection d'une ébauche de pneumatique en déposant successivement différentes couches à base d'élastomères, renforcées ou pas, ainsi que les éléments annulaires du talon. Un tel tambour comprend des gorges de réception circonférentielles extensibles radialement destinées à recevoir les talons d'une ébauche de carcasse et des éléments de type généralement connu permettant de réaliser la conformation de celle-ci.

Les éléments qui vont suivre se trouvent d'un côté du socle. De éléments similaires et symétriques se trouvent de l'autre côté et ne seront pas décrits.

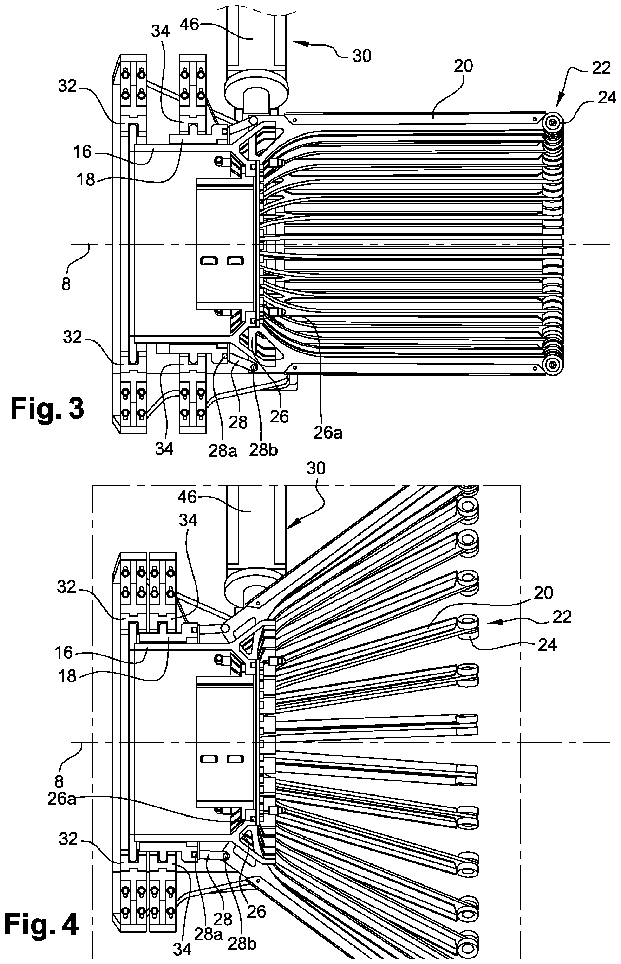

L'installation 2 comprend un support 14 monté coulissant par rapport au fût 7 coaxialement à ce dernier et sur ce dernier. Le support est notamment illustré sur les figures 3 et 4.

Le support 14 comprend ici un premier organe de connexion 16, dit organe de connexion principal, monté coulissant par rapport au fût 7 coaxialement à ce dernier et sur ce dernier.

Une nervure annulaire, dite nervure principale 17, s'étend radialement en saille d'une face externe de l'organe de connexion principal 16 sur l'intégralité de sa circonférence.

Le support 14 comprend aussi un second organe de connexion 18, dit organe de connexion secondaire, monté coulissant par rapport à l'organe de connexion principal 16 coaxialement à ce dernier et sur ce dernier. L'organe de connexion secondaire 18 s'étend ainsi autour de l'organe de connexion principal 16 en le recouvrant en partie. Il présente toutefois une longueur parallèlement à l'axe 8 inférieure à celle de l'organe de connexion principal 16, si bien que l'organe de connexion secondaire 18 ne recouvre que partiellement l'organe de connexion principal 16 comme cela est notamment visible sur la figure 3.

L'organe de connexion principal 16 et l'organe de connexion secondaire 18 sont ici chacun formé par un manchon d'axe central coaxial à l'axe 8. L'organe de connexion principal 16 sera désigné par l'expression «manchon principal » et l'organe de connexion secondaire 18 par l'expression « manchon secondaire ».

Une nervure annulaire, dite nervure secondaire 19, s'étend radialement en saille d'une face externe du manchon secondaire 18 sur l'intégralité de sa circonférence. La nervure secondaire 19 est plus proche du socle 12 que la nervure principale 17. On verra dans la suite quelles sont les fonctions des nervures principale 17 et secondaire 19.

L'installation 2 comprend plusieurs bras rectilignes 20 articulés sur le support 14. Chaque bras 20 présente une extrémité libre 22 destinée à venir au contact d'une couche de gomme crue en anneau fermé 23 à appliquer sur l'ébauche 3. Cette extrémité libre 22 est ici munie d'une roulette 24 pour rouletter la couche de gomme crue 23 lors de son application sur le flanc 5 de l'ébauche 3.

Chaque bras 20 est monté mobile en rotation par rapport au support 14. A cette fin, chaque bras 20 est ici directement articulé au support 14 par un pied 26 du bras, autour de l'axe 26a, qui s'étend dans une direction perpendiculaire à une partie principale du bras 20. Chaque bras 20 est également relié au support 14 au moyen d'une bielle 28 directement articulée d'une part au support 14 et d'autre part au bras 20, respectivement autour des axes 28a et 28b. Ici, chaque bras 20 est articulé directement au manchon principal 16 par le pied 26 du bras 20 et, indépendamment de cela, est relié au manchon secondaire 18 au moyen de la bielle 28. L'articulation des bras 20 aux manchons 16, 18 est notamment visible sur les figures 3 et 4. En faisant coulisser le support 14, on fait également coulisser les bras 20 parallèlement à l'axe 8. On comprend que ce coulissement des bras 20 peut être effectué quelle que soit leur position.

Ainsi, lorsque le manchon secondaire 18 coulisse par rapport au manchon principal 16, il entraine les bras 20 en rotation grâce aux pieds 26 et aux bielles 28. Plus précisément, quand le manchon secondaire 18 s'éloigne des bras 20, il produit la levée des bras 20 qui s'éloignent de l'axe 8. La rotation des bras 38 peut être effectuée quelle que soit leur position.

L'installation 2 comprend une station motorisée 30 externe à la base 6 et indépendante de celle-ci.

La station motorisée 30 comprend au moins une première fourche 32, dite fourche principale, apte à recouvrir et à déplacer la nervure principale 17 suivant la direction de l'axe 8. Elle comprend également au moins une seconde fourche 34, dite fourche secondaire, apte à recouvrir et à déplacer la nervure secondaire 19 suivant la direction de l'axe 8.

Les fourches principales 32 sont ici au nombre de deux et sont portées par une première plaque de support 36 de la station motorisée 30. De même, les fourches secondaires 34 sont ici au nombre de deux et sont portées par une seconde plaque de support 38 de la station motorisée 30. Les fourches 32, 34 et les plaques de support 36, 38 sont illustrées en figure 2. On peut prévoir de doter chaque plaque de support 36, 38 d'un nombre de fourches supérieur à deux dans le but d'améliorer la préhension des nervures principale 17 et secondaire 19.

Les plaques de support 36, 38 présentent ici chacune la forme d'un secteur de couronne s'étendant dans des plans perpendiculaires à l'axe 8 et sur une plage angulaire inférieure à 180°. Ici, les secteurs s'étendent sur une plage angulaire comprise entre 150° et 180°. Sur chaque secteur de couronne, les deux fourches sont placées à des extrémités libres des secteurs de couronne. De la sorte, les fourches sont pratiquement diamétralement opposées en considérant l'axe 8, ce qui permet d'optimiser la préhension des nervures principale 17 et secondaire 19.

La première plaque de support 36 est rigidement solidaire de la station motorisée 30. La seconde plaque de support 38 est elle montée coulissante par rapport à la première plaque de support 36 parallèlement à l'axe 8.

Grâce à la forme des fourches 32, 34 et des nervures 17, 19, la station motorisée 30 est apte à faire coulisser le manchon principal 16 et le manchon secondaire 18 par rapport au bâti 10 même lorsque le fût 7 est en train de tourner. En effet, la forme des fourches 32, 34 leur permet de ne pas empêcher la rotation des nervures 17, 19, et donc de ne pas empêcher celle des manchons 16 ,18. En d'autres termes, lorsque le fût 7 est en train de tourner, les nervures 17, 19 glissent dans leurs fourches 32, 34 respectives. Dans une variante (non représentée sur les figures), les fourches 32, 34 se terminent chacune par un galet qui roule sur la face frontale d'une nervure 17, respectivement 19, ce qui permet de réduire le frottement.

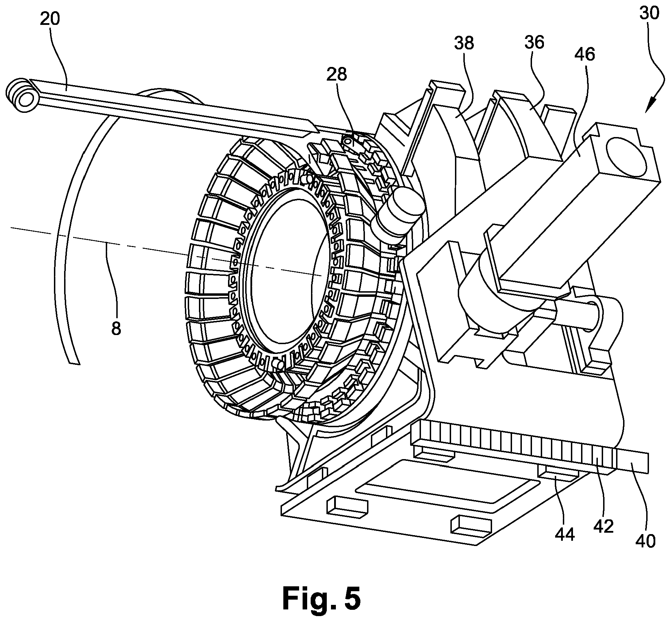

La station motorisée 30 comprend des moyens de poussée aptes à faire coulisser la première plaque de support 36, par rapport au bâti 10 parallèlement à l'axe 8 et aptes à faire coulisser la seconde plaque de support 38 par rapport à la première plaque de support 36 parallèlement à l'axe 8. Comme cela est illustré en figure 5, c'est un premier moteur 40, couplé avec une crémaillère 42 guidée par des patins 44, qui fait coulisser la première plaque de support 36, et c'est un bloc moteur 46, comprenant ici un second moteur, un réducteur et un mécanisme à vis et écrou (non représentés), qui fait coulisser la seconde plaque de support 38.

La station motorisée 30 est montée mobile entre une configuration active dans laquelle elle couplée avec les bras 20 et la base 6, au moyen des fourches 32, 34, et une configuration passive dans laquelle elle est découplée des bras 20 et de la base 6. Elle comprend par exemple à cette fin des moyens pour éloigner les plaques 36, 38 des bras 20 et de la base 6 ou les en rapprocher.

L'ensemble comprenant la base de réception 6, le support 14 et les bras 20 forme un tambour de retroussage apte à coopérer avec la station motorisée 30 externe au tambour.

L'installation 2 comprend un organe de pilotage 48 apte à piloter la station motorisée 30 pour commander une position des bras 20. L'organe de pilotage 48 comprend ici un ordinateur muni d'une unité centrale. Cette dernière contient un programme d'ordinateur comprenant des instructions de code aptes à commander l'exécution d'un procédé de retroussage tel qu'il sera décrit dans ce qui suit. Le programme d'ordinateur peut être stocké sur un support de stockage lisible par l'unité centrale de l'ordinateur.

On va maintenant décrire un procédé de retroussage mis en oeuvre par l'installation 2. Pour simplifier la présentation de ce procédé, on ne présentera que l'application d'une couche de gomme crue sur un des deux flancs 5. Le procédé s'applique symétriquement de la même manière des deux côtés de l'ébauche 3. On effectue en général le retroussage des deux côtés de l'ébauche 3 simultanément.

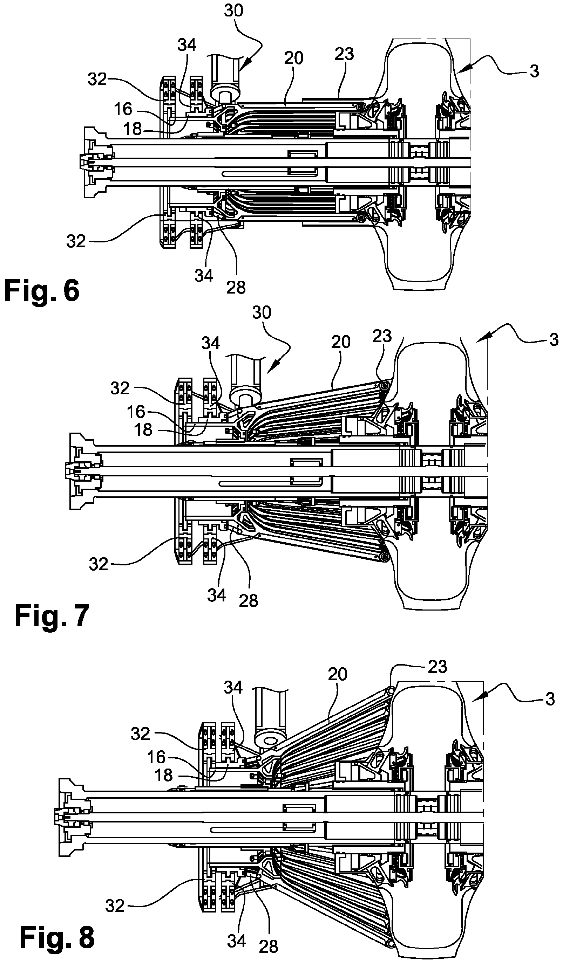

On installe d'abord l'ébauche 3 sur le socle 12 de la base 6. Il s'agit à ce stade d'une ébauche de carcasse de pneumatique. Chaque bras 20 occupe une position initiale dans laquelle l'extrémité libre 22 du bras 20 est éloignée de l'ébauche 3. Les bras 20 sont dans leur configuration la plus proche de l'axe 8 et sont parallèles à ce dernier et entre eux comme sur la figure 6, en formant un cylindre.

On place la couche de gomme en anneau fermé 23 sur les bras 20 de sorte qu'une extrémité de cette couche de gomme 23 soit en regard des extrémités libres 22 des bras qu'elle recouvre.

On approche ensuite la station motorisée 30 de la base de réception 7 et on l'accouple avec le support 14. Cela revient ici à placer les nervures principale 17 et secondaire 19 respectivement dans les fourches principales 32 et secondaires 34. La station motorisée 30 passe ainsi de la configuration passive à la configuration active.

Pour appliquer la couche de gomme 23 sur le flanc 5, on fait ensuite simultanément coulisser la station motorisée 30 par rapport au bâti 10 en direction de l'ébauche 3 et coulisser la seconde plaque de support 38 en direction de la première plaque de support 36, c'est-à-dire en l'éloignant de l'ébauche 3, grâce aux moyens de poussée décrits précédemment.

Ces deux coulissements sont pilotés par l'organe de pilotage 48 de manière à faire suivre une trajectoire prédéfinie à l'extrémité libre 22 de chaque bras 20. Cela est possible car la position des extrémités libres des bras est fonction de la position des première 36 et seconde 38 plaques de support. En effet, grâce aux pieds 26 et aux bielles 28, un déplacement de la seconde plaque de support 38 par rapport à la première entraine la rotation des bras 20 et un coulissement de la première plaque de support 36 en direction de l'ébauche 3 entraine le coulissement des bras 20 parallèlement à l'axe 8. On passe alors à la configuration illustrée en figure 7, dans laquelle la couche de gomme 23 est partiellement appliquée sur le flanc 5 de l'ébauche 3. Les première et seconde plaques de support 36, 38 forment ainsi respectivement des moyens d'entrainement en coulissement et en rotation des bras 20. On comprend également que la rotation des bras se fait indépendamment du coulissement des bras.

Au cours de ce mouvement, les extrémités des bras 20 parcourent le flanc 5 en direction radiale à l'axe 8, en direction opposée à ce dernier, c'est-à-dire en direction du sommet 4 de l'ébauche 3, et ce faisant appliquent la couche de gomme 23 sur le flanc 5.

En continuant les deux coulissements, on arrive finalement à la configuration illustrée en figure 8 dans laquelle la couche de gomme 23 recouvre complètement le flanc 5. On découple alors la station motorisée du support 14, ce qui revient à ôter les nervures 17, 19 des fourches 32, 34, et on l'éloigne de la base de réception 7. La station motorisée 30 passe ainsi de la configuration active à la configuration passive, en attente de sa prochaine utilisation.

Grâce au fait que la station motorisée 30 est externe à la base 6 et indépendante de celle-ci, on peut doter les deux côtés de l'installation 2, c'est-à-dire de part et d'autre du socle 12, de deux stations motorisées pilotées différemment l'une de l'autre. L'installation 2 permet ainsi le retroussage d'ébauches de pneumatiques ayant des profils différents et dissymétriques.

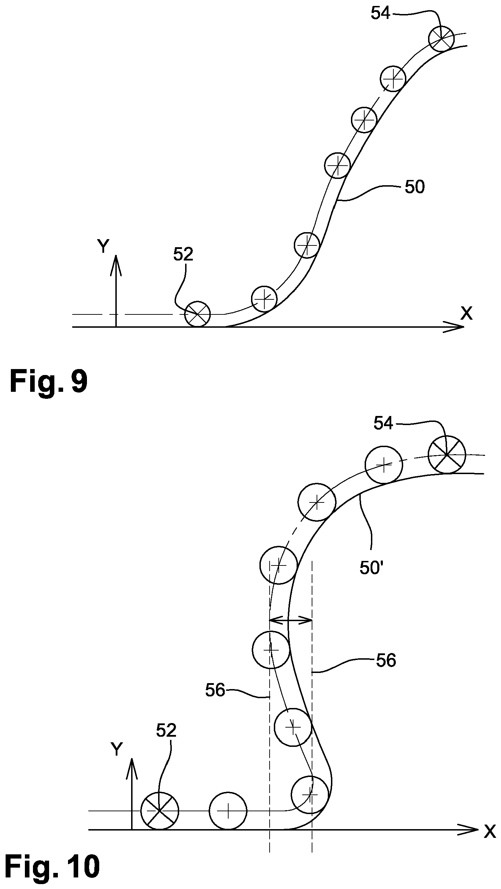

On a illustré en figure 9 un premier exemple de trajectoire prédéfinie 50, dans lequel on suit l'évolution de la position de l'extrémité libre 22 d'un bras 20 dans un repère orthogonal dont l'origine est un point du bâti 10 et dont les axes X et Y sont respectivement l'axe principal 8 et un axe radial à l'axe 8. Au cours du mouvement de l'extrémité libre 22 du bras 20, cette extrémité 22 avance constamment pendant qu'elle s'éloigne constamment de l'axe 8, les deux mouvements étant monotones, entre une position initiale 52 correspondant à la configuration illustrée en figure 5 et une position finale 54 correspondant à la configuration illustrée en figure 7.

On a illustré en figure 10 un second exemple de trajectoire prédéfinie 50'. Celui-ci diffère du premier exemple en ce que, dans une portion de la trajectoire du bras 20, son extrémité libre 22 présente une composante de mouvement qui l'éloigne d'un plan équatorial de l'ébauche 3 parallèlement à l'axe principal 8. Cette composante de mouvement correspond à un recul du manchon principal 16 parallèlement à l'axe principal 8. Cette portion est délimitée par les deux traits discontinus 56. Autrement dit, au cours de son mouvement, l'extrémité libre 22 avance, puis recule puis avance de nouveau suivant cet axe 8. Cela a lieu pendant que l'extrémité 22 s'éloigne de l'axe 8 de façon monotone. Cette trajectoire 44 est utilisée lorsque le type d'ébauche à retrousser l'impose, par exemple s'il s'agit d'une ébauche dite « en oméga ».

Bien entendu, on pourra apporter à l'invention de nombreuses modifications sans sortir du cadre de celle-ci.

## Revendications

1. Installation de retroussage d'ébauches de pneumatiques (2) comprenant :
- une base de réception (6) d'une ébauche de pneumatique (3),
- des bras de retroussage (20) reliés à la base (6),
- des moyens d'entrainement en coulissement (36), externes à la base (6), aptes à entrainer les bras (20) en coulissement par rapport à la base (6), et
- des moyens d'entrainement en rotation (38), externes à la base (6), aptes à entrainer les bras (20) en rotation par rapport à la base (6) indépendamment d'un coulissement des bras (20) et quelle que soit la position des bras par rapport à l'ébauche,
**caractérisée en ce que** les moyens d'entrainement en coulissement (36) et les moyens d'entrainement en rotation (38) sont montés mobiles entre une configuration active dans laquelle les moyens d'entrainement en coulissement (36) et les moyens d'entrainement en rotation (38) sont couplés avec les bras (20) et la base (6) et une configuration passive dans laquelle les moyens d'entrainement en coulissement (36) et les moyens d'entrainement en rotation (38) sont découplés des bras (20) et de la base (6).

2. Installation (2) selon la revendication précédente, dans laquelle les moyens d'entrainement en coulissement (36) et les moyens d'entrainement en rotation (38) occupent la configuration passive.

3. Installation (2) selon l'une quelconque des revendications précédentes, dans laquelle la base (6) comprend un fût (7) de support d'une ébauche, monté mobile en rotation par rapport à un bâti (10) de l'installation (2), les moyens d'entrainement en coulissement (36) et les moyens d'entrainement en rotation (38) étant aptes à entrainer les bras (20) en coulissement et en rotation même lorsque le fût (7) est en rotation.

4. Installation (2) selon l'une quelconque des revendications précédentes, comprenant en outre un support (14) monté coulissant par rapport à la base (6), les bras (20) étant articulés au support (14).

5. Installation (2) selon l'une quelconque des revendications précédentes, dans laquelle le support (14) comprend un premier organe de connexion (16) monté coulissant par rapport à la base (6) et un second organe de connexion (18) monté coulissant par rapport au premier organe de connexion (16), les bras (20) étant articulés d'une part au premier organe de connexion (16) et d'autre part au second organe de connexion (18).

6. Installation (2) selon la revendication précédente, dans laquelle les premier et second organes de connexion (16, 18) comprennent chacun au moins un manchon.

7. Installation (2) selon l'une quelconque des revendications 5 ou 6, dans lequel le second organe de connexion (18) recouvre le premier organe de connexion (16).

8. Installation (2) selon l'une quelconque des revendications précédentes, comprenant en outre un organe de pilotage (48) des moyens d'entrainement en coulissement (36) et les moyens d'entrainement en rotation (38) pour commander une position des bras (20).

9. Procédé de retroussage d'une ébauche de pneumatique (3) dans lequel :
- l'ébauche (3) étant installée sur une base de réception (6), des moyens d'entrainement en coulissement (36) externes à la base (6) font coulisser des bras de retroussage (20) par rapport à l'ébauche (3),
- des moyens d'entrainement en rotation (38) externes à la base (6) font tourner les bras par rapport à l'ébauche (3) indépendamment du coulissement des bras (20), et
- après le coulissement et la rotation des bras (20), on découple les moyens d'entrainement en coulissement (36) et les moyens d'entrainement en rotation (38) de la base (6) et des bras (20).

10. Procédé selon la revendication précédente, dans lequel un organe de pilotage (48) commande les moyens d'entrainement en coulissement (36) et les moyens d'entrainement en rotation (38) pour déplacer les bras (20) selon des trajectoires prédéfinies (42, 42').

## Patentansprüche

1. Anlage zum Umschlagen von Reifenrohlingen (2), umfassend:
- eine Aufnahmebasis (6) zum Aufnehmen eines Reifenrohlings (3),
- Umschlagarme (20), die mit der Basis (6) verbunden sind,
- Schiebeantriebsmittel (36) außerhalb der Basis (6), die geeignet sind, die Arme (20) in Bezug auf die Basis (6) verschieblich anzutreiben, und
- Drehantriebsmittel (38) außerhalb der Basis (6), die geeignet sind, die Arme (20) in Bezug auf die Basis (6) drehanzutreiben, unabhängig von einem Schieben der Arme (20) und gleich welche Position die Arme in Bezug auf den Rohling haben,
**dadurch gekennzeichnet, dass** die Schiebeantriebsmittel (36) und die Drehantriebsmittel (38) beweglich gelagert sind zwischen einer aktiven Anordnung, in der die Schiebeantriebsmittel (36) und die Drehantriebsmittel (38) mit den Armen (20) und der Basis (6) gekoppelt sind, und einer passiven Anordnung, in der die Schiebeantriebsmittel (36) und die Drehantriebsmittel (38) von den Armen (20) und der Basis (6) entkoppelt sind.

2. Anlage (2) nach dem vorhergehenden Anspruch, bei der die Schiebeantriebsmittel (36) und die Drehantriebsmittel (38) die passive Anordnung einnehmen.

3. Anlage (2) nach einem der vorhergehenden Ansprüche, bei der die Basis (6) einen Schaft (7) zum Tragen eines Rohlings umfasst, der in Bezug auf ein Gestell (10) der Anlage (2) drehbeweglich gelagert ist, wobei die Schiebeantriebsmittel (36) und die Drehantriebsmittel (38) geeignet sind, die Arme (20) selbst dann verschieblich und drehend anzutreiben, wenn der Schaft (7) dreht.

4. Anlage (2) nach einem der vorhergehenden Ansprüche, umfassend ferner einen Träger (14), der in Bezug auf die Basis (6) verschieblich gelagert ist, wobei die Arme (20) an den Träger (14) angelenkt sind.

5. Anlage (2) nach einem der vorhergehenden Ansprüche, bei welcher der Träger (14) ein erstes Verbindungselement (16) umfasst, das in Bezug auf die Basis (6) verschieblich gelagert ist, und ein zweites Verbindungselement (18), das in Bezug auf das erste Verbindungselement (16) verschieblich gelagert ist, wobei die Arme (20) zum einen an das erste Verbindungselement (16) und zum anderen an das zweite Verbindungselement (18) angelenkt sind.

6. Anlage (2) nach dem vorhergehenden Anspruch, bei der die ersten und zweiten Verbindungselemente (16, 18) jeweils mindestens eine Hülse umfassen.

7. Anlage (2) nach einem der Ansprüche 5 oder 6, bei der das zweite Verbindungselement (18) das erste Verbindungselement (16) überdeckt.

8. Anlage (2) nach einem der vorhergehenden Ansprüche, umfassend ferner ein Ansteuerungselement (48) zum Ansteuern der Schiebeantriebsmittel (36) und der Drehantriebsmittel (38), um eine Position der Arme (20) zu steuern.

9. Verfahren zum Umschlagen eines Reifenrohlings (3), bei dem:
- wenn der Rohling (3) an einer Aufnahmebasis (6) angebracht ist, Schiebeantriebsmittel (36) außerhalb der Basis (6) die Umschlagarme (20) in Bezug auf den Rohling (3) schieben,
- Drehantriebsmittel (38) außerhalb der Basis (6) die Arme in Bezug auf den Rohling (3) unabhängig vom Schieben der Arme (20) drehen lassen, und
- nach dem Schieben und Drehen der Arme (20) die Schiebeantriebsmittel (36) und die Drehantriebsmittel (38) von der Basis (6) und von den Armen (20) entkoppelt werden.

10. Verfahren nach dem vorhergehenden Anspruch, bei dem ein Ansteuerungselement (48) die Schiebeantriebsmittel (36) und die Drehantriebsmittel (38) steuert, um die Arme (20) entlang von vorgegebenen Bahnen (42, 42') zu bewegen.

## Claims

1. Folding-up system for green tyres (2) comprising:
- a base (6) for receiving a green tyre (3),
- folding-up arms (20) connected to the base (6),
- sliding drive means (36), external relative to the base (6), that are able to drive the arms (20) to slide relative to the base (6), and
- rotational drive means (38), external relative to the base (6), that are able to drive the arms (20) to rotate relative to the base (6) independently of any sliding of the arms (20) and regardless of the position of the arms relative to the green tyre,
**characterized in that** the sliding drive means (36) and the rotational drive means (38) are mounted to move between an active configuration in which the sliding drive means (36) and the rotational drive means (38) are coupled with the arms (20) and the base (6) and a passive configuration in which the sliding drive means (36) and the rotational drive means (38) are uncoupled from the arms (20) and from the base (6).

2. System (2) according to the preceding claim, wherein the sliding drive means (36) and the rotational drive means (38) occupy the passive configuration.

3. System (2) according to either of the preceding claims, wherein the base (6) comprises a shaft (7) for holding a green tyre, mounted to move in rotation relative to a frame (10) of the system (2), the sliding drive means (36) and the rotational drive means (38) being able to drive the arms (20) to slide and to rotate even when the shaft (7) is in rotation.

4. System (2) according to any one of the preceding claims, further comprising a holder (14) mounted to slide relative to the base (6), the arms (20) being articulated to the holder (14).

5. System (2) according to any one of the preceding claims, wherein the holder (14) comprises a first connecting member (16) mounted to slide relative to the base (6) and a second connecting member (18) mounted to slide relative to the first connecting member (16), the arms (20) being articulated on the one hand to the first connecting member (16) and on the other hand to the second connecting member (18).

6. System (2) according to the preceding claim, wherein the first and second connecting members (16, 18) each comprise at least one sleeve.

7. System (2) according to either of Claims 5 or 6, wherein the second connecting member (18) covers the first connecting member (16).

8. System (2) according to any one of the preceding claims, further comprising a control member (48) for the sliding drive means (36) and the rotational drive means (38) such as to command a position of the arms (20) .

9. Method for folding up a green tyre (3) in which:
- the green tyre (3) being installed on a receiving base (6), sliding drive means (36), external relative to the base (6), slide the folding-up arms (20) relative to the green tyre (3),
- rotational drive means (38), external relative to the base (6), turn the arms relative to the green tyre (3) independently of the sliding of the arms (20), and
- after the sliding and the rotation of the arms (20), the sliding drive means (36) and the rotational drive means (38) are decoupled from the base (6) and from the arms (20).

10. Method according to the preceding claim, wherein a control member (48) commands the sliding drive means (36) and the rotational drive means (38) such as to move the arms (20) along predefined trajectories (42, 42').
